# EUROPEAN PATENT SPECIFICATION

(11) **EP 3 290 194 B1**
(45) Date of publication and mention of the grant of the patent: **26.02.2020**
(21) Application number: 16786620.1
(22) Date of filing: 11.02.2016
(51) Int. Cl.: B29D 99/00, B60R 13/06, C09K 3/14, B29K 23/00, B29C 35/08

(54) **VEHICLE WEATHER STRIP STRUCTURE AND MANUFACTURING METHOD**
DICHTUNGSSTREIFENSTRUKTUR FÜR FAHRZEUG UND HERSTELLUNGSVERFAHREN
STRUCTURE DE BOURRELET D'ÉTANCHÉITÉ DE VÉHICULE, ET PROCÉDÉ DE FABRICATION

(30) Priority: 28.04.2015 KR 20150059682; 06.01.2016 KR 20160001764; 07.01.2016 KR 20160002266
(43) Date of publication of application: 07.03.2018
(73) Proprietor: DMC, Inc., Seongnam-si, Gyeonggi-do 13493 (KR)
(72) Inventor: KIM, Sung Sool, Hwaseong-si Gyeonggi-do 445-320 (KR); KIM, Hyung Joon, Seoul 07997 (KR); KIM, Dong Ui, Cheongju-si Chungcheongbuk-do 28338 (KR); CHO, Myeong Won, Cheongju-si Chungcheongbuk-do 28425 (KR)
(74) Representative: Zardi, Marco
(86) International application number: PCT/KR2016/001400
(87) International publication number: WO 2016/175433

(56) References cited:
- JP-A- H08 175 291
- JP-A- 2002 103 411
- JP-A- 2004 083 641
- JP-A- 2004 149 102
- JP-A- 2006 027 431
- US-A1- 2004 043 188
- US-A1- 2005 235 572
- US-B1- 6 499 256

## Description

### [Technical Field]

The present invention relates to an automobile weather strip and a method for manufacturing the same, and more particularly, to an automobile weather strip and a method for manufacturing the same wherein the weather strip is made of an olefinic rubber or thermoplastic elastomer and a slip agent layer having low frictional resistance is formed on the surface of the weather strip.

### [Background Art]

Generally, a weather strip for an automobile is a rubber packing adapted to seal the interior and trunk room of the automobile to prevent external environmental materials such as external air, sound, dust, rain water, snow and so on from entering the interior of the automobile and also provided in such a manner as to allow a door, a body, a door channel, a trunk lid or the like to be installed along the edge thereof so that the impact occurring when the door is closed can be absorbed, and while the automobile is being driven, the generation of the vibrations in the trunk lid can be suppressed.

There are various kinds of weather strips such as a body weather strip, a door weather strip, a glass run weather strip, a trunk lid weather strip, a back door weather strip and the like, and they are installed on the spaces between a body side and a door frame, so that they absorb the impact occurring when the door is closed or prevent foreign matters from entering the interior of the automobile from the outside.

Conventional weather strips are made in such a manner as to allow a plastic slip agent to be extruded and co-extruded at the same time on the surface of a seal part. In this case, the slip agent has excellent durability, but since the slip agent is made of a hard material, a compressive load becomes high to cause some problems like surface fracture, thereby making it hard to commercialize the conventional weather strip.

On the other hand, a conventional weather strip as disclosed in Japanese Patent Application Laid-open No.2004-149102 is configured wherein a super high hardness surface layer is provided, which is weak in permanent deformation, and multiple extrusion is needed, which is hard to control the multiple extrusion. Further, dust contamination caused by the static electricity on the surface becomes serious, and many problems happen in the treatment thereof, thereby making it hard to commercialize the conventional weather strip.

Furthermore, there is provided European Patent Application No.01197519 that relates to a method for making a polyolefin resin compound having improved strength, impact resistance and heat resistance and to a polyolefin resin composition for making a polyolefin product. In this document, however, the problems the above-mentioned conventional practices have had are still found.

US 2004/043188 A1 discloses a weather strip for a car which comprises a grip and a seal part.

### [Disclosure]

### [Technical Problem]

Accordingly, the present invention has been made in view of the above-mentioned problems occurring in the prior art, and it is an object of the present invention to provide an automobile weather strip and a method for manufacturing the same that applies a liquid-phase slip agent to the surface of a seal part or coupling member of the weather strip, thereby improving the emotional quality, reinforcement, and durability thereof.

### [Technical Solution]

To accomplish the above-mentioned object, according to the present invention, there is provided a method for manufacturing an automobile weather strip having a seal part having a sectional shape of U and a sealing function, a coupling member formed unitarily with the seal part in such a manner as to be coupled to a flange portion of an automobile, and a seam material insertedly disposed inside the coupling member, the method including: (a) weather strip manufacturing step wherein the seam material and a thermoplastic elastomer are extruded and molded; (b) pretreatment step wherein the surface of the weather strip manufactured is pretreated; (c) slip agent applying step wherein a slip agent made by mixing silicone and polyurethane is applied to the surface of the weather strip pretreated through the pretreatment step; and (d) curing step wherein the slip agent coating layer formed through the slip agent applying step is cured, wherein the pretreatment step (b) is carried out through any one of a primer applying method and an electrical plasma radiation method, and wherein the slip agent being made by mixing 50 to 90% by weight of the silicone and 10 to 50% by weight of the polyurethane.

According to the present invention, desirably, at the slip agent applying step (c), the slip agent made by mixing the silicone and polyurethane is applied to the surface of the weather strip when the surface temperature of the weather strip is in a range of 25 to 150°C.

According to the present invention, desirably, at the curing step (d), the weather strip is cured through any one or combination of infrared (IR) light, near infrared (NIR) light, and heat at a given temperature of 50 to 160°C for a given period of time.

According to the present invention, desirably, the method further includes: (e) first cooling step in which the weather strip becomes cool after the weather strip manufacturing step (a) or after the pretreatment step (b); and (f) second cooling step in which the weather strip becomes cool after the curing step (d).

According to the present invention, desirably, the seam material of the weather strip is made of any one of a thermoplastic material such as polypropylene or polyamide and steel, the thermoplastic material having talc or glass fiber added thereto.

According to the present invention, desirably, the thermoplastic elastomer includes any one selected from a thermoplastic styrenic block copolymer SBC, a thermoplastic olefinic elastomer TPO, thermoplastic polyurethane TPU, a thermoplastic polyamide TPAE, a thermoplastic polyester elastomer TPEE, thermoplastic polyvinyl chloride TPVC, and modified products thereof or a combination of the two or more.

### [Advantageous Effects]

According to the present invention, the automobile weather strip and the method for manufacturing the same can improve emotional quality, compression set performance, reinforcement, and durability thereof.

### [Description of Drawings]

FIG.1 is a sectional view showing an automobile weather strip according to the present invention.
FIG.2 is a flowchart showing a method for manufacturing an automobile weather strip according to the present invention.
FIGS.3 and 4 are a table and graphs showing the test results of long term load loss set (LLS) of GMW 15564 of the weather strip manufactured according to the present invention.
FIG.5 is a sectional view showing various examples of the weather strip manufactured according to the present invention.

### [Best Mode for Invention]

Objects, characteristics and advantages of the present invention will be more clearly understood from the detailed description as will be described below and the attached drawings. Before the present invention is disclosed and described, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one of ordinary skill in the art to variously employ the present invention in virtually any appropriately detailed structure. In the description, it should be noted that the parts corresponding to those of the drawings are indicated by corresponding reference numerals.

Hereinafter, an explanation on a method for manufacturing an automobile weather strip according to the present invention will be in detail given with reference to the attached drawing.

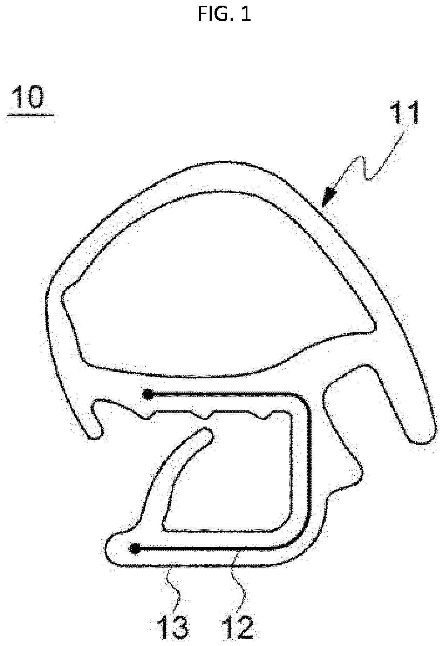

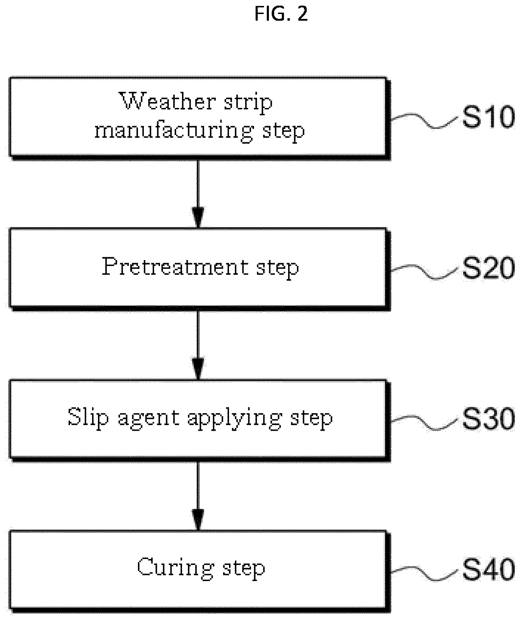

FIG.1 is a sectional view showing an automobile weather strip according to the present invention, and FIG.2 is a flowchart showing a method for manufacturing an automobile weather strip according to the present invention.

As shown in FIGS.1 and 2, an automobile weather strip 10 according to the present invention includes a seal part 11 having a sectional shape of U and a sealing function, a coupling member 13 formed unitarily with the seal part 11 in such a manner as to be coupled to a flange portion of an automobile, and a seam material 12 insertedly disposed inside the coupling member 13.

Further, a method for manufacturing an automobile weather strip according to the present invention includes a weather strip manufacturing step S10, a pretreatment step S20, a slip agent applying step S30, and a curing step S40.

At the weather strip manufacturing step S10, first, the seam material 12 and a thermoplastic elastomer are extruded and molded to make the weather strip 10.

At this time, desirably, the seam material 12 of the weather strip 10 is made of any one selected from a thermoplastic material made by adding talc or glass fiber to polypropylene or polyamide and steel.

At the pretreatment step S20, pretreatments like chemical, electrical, and physical treatments are applied to the surface of the coupling member 13 and the surface of the seal part 11 of the weather strip 10 manufactured through the weather strip manufacturing step S10.

When the surface temperature of the weather strip 10 is in a range of 25 to 150°C, at this time, a primer is desirably applied and then cured within one minute.

At this time, the primer includes one or more selected from the group consisting of fluorine, polypropylene, polyethylene, carbon, amide wax, adhesion promoter and oil.

At the slip agent applying step S30, a slip agent including silicone and polyurethane mixed to each other is applied to the surface of the primer applied through the pretreatment step S20.

Under the slip agent applying step S30, at this time, the slip agent made by mixing silicone and polyurethane is desirably applied to the surface of the weather strip 10 when the surface temperature of the weather strip 10 is in a range of 25 to 150°C.

At this time, the slip agent is made by mixing 20 to 90% by weight of the silicone and 10 to 80% by weight of the polyurethane.

More desirably, the slip agent is applied to the surface of the weather strip 10 when the surface temperature of the weather strip 10 is in a range of 80 to 100°C.

That is, the application of the slip agent to the surface of the weather strip 10 improves emotional quality and compression set of the automobile.

Further, dust contamination caused by static electricity can be prevented.

At the curing step S40, a coating layer formed by the application of the primer and the slip agent is cured.

Under the curing step S40, at this time, the weather strip 10 is desirably cured through any one or combination of infrared (IR) light, near infrared (NIR) light, and heat at a room temperature or a temperature of 160°C or under within five minutes.

Particularly, the weather strip 10 is effectively cured through indirect heat like infrared (IR) light, near infrared (NIR) light, and heat, thereby preventing the occurrence of the heat deflection of the weather strip 10.

Further, the method for manufacturing the automobile weather strip according to the present invention includes a first cooling step and a second cooling step.

At the first cooling step, the weather strip 10 becomes cool after the weather strip manufacturing step or after the primer application step.

At the second cooling step, the weather strip 10 becomes cool after the curing step.

The manufactured weather strip 10 is made of a styrenic or olefinic rubber or elastomer.

At this time, the thermoplastic elastomer is desirably made of any one selected from a thermoplastic styrenic block copolymer SBC, a thermoplastic olefinic elastomer TPO, thermoplastic polyurethane TPU, a thermoplastic polyamide TPAE, a thermoplastic polyester elastomer TPEE, thermoplastic polyvinyl chloride TPVC, and modified products thereof or a combination of the two or more.

At this time, the material used for the seal part of the weather strip desirably has a tensile strength in a range of 1.0 to 5.0 Mpa.

Hereinafter, the test result of long term load loss set (LLS) of GMW 15564 of the weather strip manufactured according to the present invention will be explained.

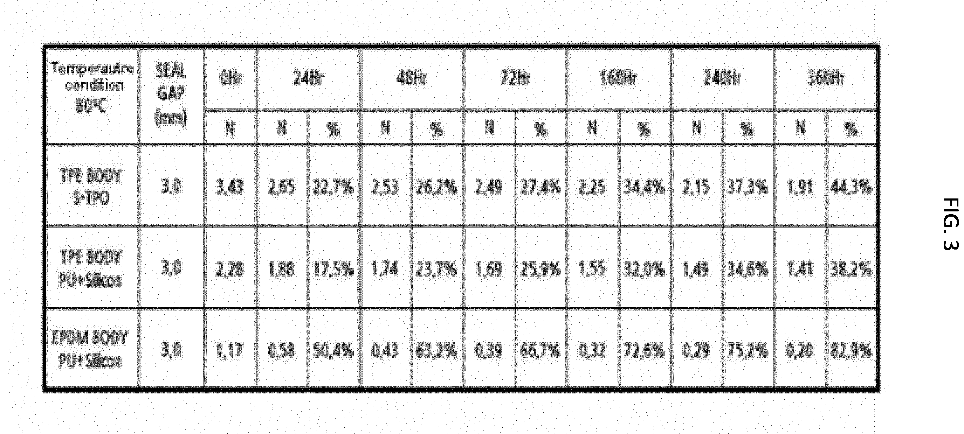

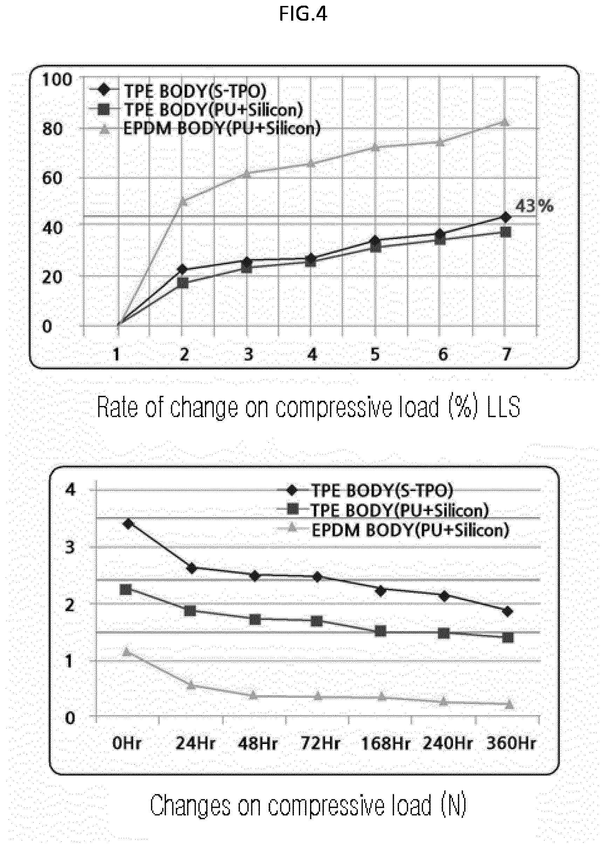

FIGS.3 and 4 are a table and graphs showing the test results of long term load loss set (LLS) of GMW 15564 of the weather strip manufactured according to the present invention.

Referring to the test result of long term load loss set (LLS) of GMW 15564 of the weather strip manufactured according to the present invention as shown in FIGS.3 and 4, the standard of the weather strip 10 has to have the rate of change on compressive load of 43% or under at a temperature condition of 80°C for 360 hours.

As shown in FIGS.3 and 4, that is, the method for manufacturing the automobile weather strip according to the present invention is carried out wherein the slip agent made by mixing the silicone and polyurethane is applied to the surface of the thermoplastic elastomer, and in this case, the rate of change on compressive load at a temperature condition of 80°C for 360 hours is 38.2%. On the other hand, it can be appreciated that other weather strips have the rate of change on compressive load of 43% or more.

The method for manufacturing the automobile weather strip according to the present invention is carried out wherein the weather strip is made of the thermoplastic elastomer and the slip agent made by mixing the silicone and polyurethane is applied to the surface of the thermoplastic elastomer, thereby satisfying the above-mentioned standard of the weather strip 10.

As described above, the weather strip according to the present invention includes the seal part 11 having a sectional shape of U and a sealing function, the coupling member 13 formed unitarily with the seal part 11 in such a manner as to be coupled to a flange portion of an automobile, and the seam material 12 insertedly disposed inside the coupling member 13, and the weather strip is made by extruding and molding the seam material 12 and a thermoplastic elastomer. Next, the primer is applied to the surface of the extruded weather strip 10, and the slip agent made by mixing silicone and polyurethane is applied to the surface of the applied primer. After that, the primer and slip agent coating layer is cured, and in this case, the primer is applied and then cured within one minute when the surface temperature of the weather strip 10 is in a range of 25 to 150°C. Further, the slip agent made by mixing silicone and polyurethane is sprayed on the surface of the weather strip when the surface temperature of the weather strip 10 is in a range of 25 to 150°C. At this time, the slip agent is made by mixing 50 to 90% by weight of the silicone and 10 to 50% by weight of the polyurethane.

According to the present invention, further, the weather strip desirably has a tensile strength in a range of 2.0 to 3.0 Mpa.

According to the present invention, furthermore, the curing process of the coating layer is desirably carried out through any one or combination of infrared (IR) light, near infrared (NIR) light, and heat at a temperature of 50 to 160°C or under within five minutes.

According to the present disclosure, moreover, the automobile weather strip according to the present disclosure includes the first cooling step wherein the weather strip 10 becomes cool after the primer is applied to the surface of the weather strip and the second cooling step wherein the weather strip 10 becomes cool after the slip agent coating layer is cured.

According to the present invention, further, desirably, the weather strip to which the slip agent is applied has a tensile modulus of 2000 to 5000 Mpa.

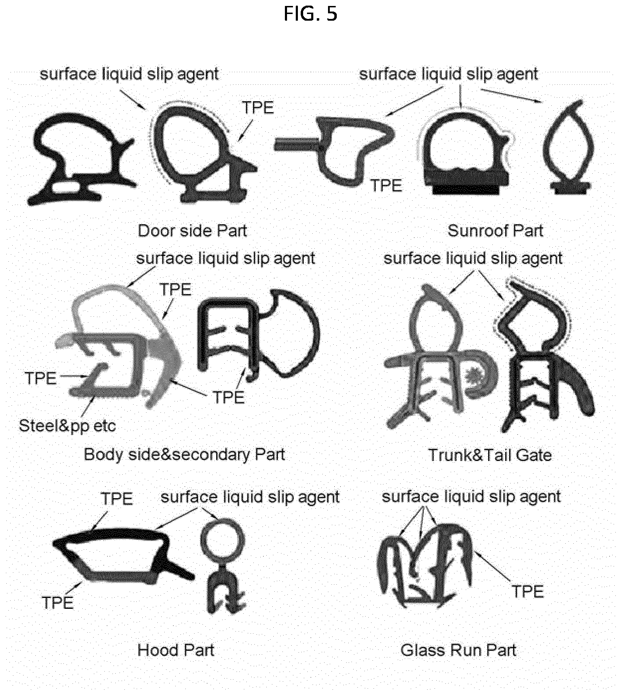

FIG.5 is a sectional view showing various examples of the weather strip manufactured according to the present invention.

Referring to FIG.5, the weather strip manufactured through the method for manufacturing the automobile weather strip according to the present invention is applicable to a variety of places such as a door side part, sunroof part, trunk and tail gate and so on, and provides more improvements in compression set performance, reinforcement, and durability than those in the conventional practices.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

### [Explanation on reference numerals in the drawings]

- 10:: weather strip
- 11:: seal part
- 12:: seam material
- 13:: coupling member

## Claims

1. A method for manufacturing an automobile weather strip (10) having a seal part (11) having a sectional shape of U and a sealing function, a coupling member (13) formed unitarily with the seal part (11) in such a manner as to be coupled to a flange portion of an automobile, and a seam material (12) insertedly disposed inside the coupling member (13), the method comprising:
(a) weather strip manufacturing step (S10) wherein the seam material (12) and a thermoplastic elastomer are extruded and molded;
and being **characterized by**:
(b) pretreatment step (S20) wherein the surface of the weather strip manufactured is pretreated;
(c) slip agent applying step (S30) wherein a slip agent made by mixing silicone and polyurethane is applied to the surface of the weather strip pretreated through the pretreatment step; and
(d) curing step (S40) wherein the slip agent coating layer formed through the slip agent applying step is cured,
wherein the pretreatment step (b) is carried out through any one of a primer applying method and an electrical plasma radiation method, and
wherein the slip agent being made by mixing 50 to 90% by weight of the silicone and 10 to 50% by weight of the polyurethane.

2. The method according to claim 1, wherein at the slip agent applying step (c), the slip agent made by mixing the silicone and polyurethane is applied to the surface of the weather strip (10) when the surface temperature of the weather strip (10) is in a range of 25 to 150°C.

3. The method according to claim 1, wherein at the curing step (d), the weather strip (10) is cured through any one or combination of infrared (IR) light, near infrared (NIR) light, and heat at a given temperature of 50 to 160°C for a given period of time.

4. The method according to claim 1, further comprising:
(e) first cooling step in which the weather strip (10) becomes cool after the weather strip manufacturing step (a) or after the pretreatment step (b); and
(f) second cooling step in which the weather strip (10) becomes cool after the curing step (d).

5. The method according to claim 1, wherein the seam material (12) of the weather strip (10) is made of any one of a thermoplastic material such as polypropylene or polyamide and steel, the thermoplastic material having talc or glass fiber added thereto.

6. The method according to claim 1, wherein the thermoplastic elastomer includes any one selected from a thermoplastic styrenic block copolymer SBC, a thermoplastic olefinic elastomer TPO, thermoplastic polyurethane TPU, a thermoplastic polyamide TPAE, a thermoplastic polyester elastomer TPEE, thermoplastic polyvinyl chloride TPVC, and modified products thereof or a combination of the two or more.

7. An automobile weather strip (10) comprising: a seal part (11) having a sectional shape of U and a sealing function; a coupling member (13) formed unitarily with the seal part (11) in such a manner as to be coupled to a flange portion of an automobile; and a seam material (12) insertedly disposed inside the coupling member (13), wherein the weather strip (10) is made by extruding and molding the seam material (12) and a thermoplastic elastomer, a primer is applied to the surface of the extruded weather strip (10), a slip agent made by mixing silicone and polyurethane is applied to the surface of the applied primer, and the primer and slip agent coating layer is cured, the primer being applied and then cured within one minute when the surface temperature of the weather strip (10) is in a range of 25 to 150°C, the slip agent made by mixing the silicone and polyurethane being sprayed on the surface of the weather strip (10) when the surface temperature of the weather strip (10) is in a range of 25 to 150°C, and the slip agent being made by mixing 50 to 90% by weight of the silicone and 10 to 50% by weight of the polyurethane.

8. The automobile weather strip (10) according to claim 7, wherein the weather strip (10) has a tensile strength in a range of 2.0 to 3.0 Mpa.

9. The automobile weather strip (10) according to claim 7, wherein the weather strip (10) to which the slip agent is applied has a tensile modulus of 2000 to 5000 Mpa.

## Patentansprüche

1. Verfahren zur Herstellung eines Dichtungsstreifens (10) für ein Fahrzeug, mit einem Dichtungsabschnitt (11) mit U-förmigem Querschnitt und Dichtungsfunktion, einem Kopplungsglied (13), das mit dem Dichtungsabschnitt (11) derart einstückig geformt ist, dass es mit einem Flanschteil eines Fahrzeugs koppelbar ist, und einem Nahtmaterial (12), das innerhalb des Kopplungsglieds (13) eingefügt platziert ist, wobei das Verfahren umfasst:
(a) einen Dichtungsstreifenherstellungsschritt (S10), bei dem das Nahtmaterial (12) und ein thermoplastisches Elastomer extrudiert und geformt werden;
und **gekennzeichnet durch**:
(b) einen Vorbehandlungsschritt (S20), bei dem die Oberfläche des hergestellten Dichtungsstreifens vorbehandelt wird;
(c) einen Schritt zum Aufbringen eines Gleitmittels (S30), bei dem ein durch Mischen von Silikon und Polyurethan hergestelltes Gleitmittel auf die Oberfläche des durch den Vorbehandlungsschritt vorbehandelten Dichtungsstreifens aufgebracht wird; und
(d) einen Härtungsschritt (S40), bei dem die durch den Schritt zum Aufbringen des Gleitmittels gebildete Gleitmitteldeckschicht gehärtet wird,
wobei der Vorbehandlungsschritt (b) durch ein Verfahren zum Aufbringen eines Grundiermittels oder ein elektrisches Plasmastrahlungsverfahren ausgeführt wird, und
wobei das Gleitmittel durch Mischen von 50 bis 90 Gewichts-% Silikon und 10 bis 50 Gewichts-% Polyurethan hergestellt wird.

2. Verfahren nach Anspruch 1, wobei in Schritt (c) zum Aufbringen eines Gleitmittels das durch Mischen von Silikon und Polyurethan hergestellte Gleitmittel auf die Oberfläche des Dichtungsstreifens (10) aufgebracht wird, wenn die Oberflächentemperatur des Dichtungsstreifens (10) sich im Bereich von 25 bis 150°C befindet.

3. Verfahren nach Anspruch 1, wobei im Härtungsschritt (d) der Dichtungsstreifen (10) durch ein beliebiges oder eine Kombination aus Infrarotlicht (IR), nahes Infrarotlicht (NIR), und Wärme einer bestimmten Temperatur von 50 bis 160°C für eine bestimmte Zeitdauer gehärtet wird.

4. Verfahren nach Anspruch 1, weiter umfassend:
(e) einen ersten Abkühlungsschritt, bei dem der Dichtungsstreifen (10) nach dem Dichtungsstreifenherstellungsschritt (a) oder nach dem Vorbehandlungsschritt (b) abkühlt; und
(f) einen zweiten Abkühlungsschritt, bei dem der Dichtungsstreifen (10) nach dem Härtungsschritt (d) abkühlt.

5. Verfahren nach Anspruch 1, wobei das Nahtmaterial (12) des Dichtungsstreifens (10) aus thermoplastischem Material wie Polypropylen oder Polyamid und Stahl hergestellt wird, wobei dem thermoplastischen Material Talkum oder Glasfaser zugefügt wird.

6. Verfahren nach Anspruch 1, wobei das thermoplastische Elastomer ein thermoplastisches Styrolblockcopolymer SBC, ein thermoplastisches Olefinelastomer TPO, thermoplastisches Polyurethan TPU, ein thermoplastisches Polyamid TPAE, ein thermoplastisches Polyester-Elastomer TPEE, thermoplastisches Polyvinylchlorid TPVC oder modifizierte Produkte davon oder eine Kombination zweier oder mehrerer davon umfasst.

7. Dichtungsstreifen (10) für ein Fahrzeug, umfassend: einen Dichtungsabschnitt (11) mit U-förmigem Querschnitt und einer Dichtungsfunktion; ein Kopplungsglied (13), das mit dem Dichtungsabschnitt (11) derart einstückig geformt ist, dass es mit einem Flanschteil eines Fahrzeugs koppelbar ist; und ein Nahtmaterial (12), das innerhalb des Kopplungsglieds (13) eingefügt platziert ist, wobei der Dichtungsstreifen (10) durch Extrudieren und Formen des Nahtmaterials (12) und eines thermoplastischen Elastomers hergestellt wird, ein Grundiermittel auf die Oberfläche des extrudierten Dichtungsstreifens (10) aufgebracht wird, ein durch Mischen von Silikon und Polyurethan hergestelltes Gleitmittel auf die Oberfläche des aufgebrachten Grundiermittels aufgebracht wird, und die Grundiermittel- und Gleitmitteldeckschicht gehärtet wird, wobei das Grundiermittel aufgebracht und dann innerhalb einer Minute gehärtet wird, wenn die Oberflächentemperatur des Dichtungsstreifens (10) in einem Bereich von 25 bis 150°C ist, wobei das durch Mischen von Silikon und Polyurethan hergestellte Gleitmittel auf die Oberfläche des Dichtungsstreifens (10) aufgesprüht wird, wenn die Oberflächentemperatur des Dichtungsstreifens (10) in einem Bereich von 25 bis 150°C ist, und das Gleitmittel durch Mischen von 50 bis 90 Gewichts-% Silikon und 10 bis 50 Gewichts-% Polyurethan hergestellt wird.

8. Dichtungsstreifen (10) für ein Fahrzeug nach Anspruch 7, wobei der Dichtungsstreifen (10) eine Zugfestigkeit in einem Bereich von 2,0 bis 3,0 MPa aufweist.

9. Dichtungsstreifen (10) für ein Fahrzeug nach Anspruch 7, wobei der Dichtungsstreifen (10), auf den das Gleitmittel aufgebracht ist, einen Zugmodul von 2000 bis 5000 MPa aufweist.

## Revendications

1. Procédé destiné à fabriquer un bourrelet d'étanchéité automobile (10) présentant une partie de joint d'étanchéité (11) présentant une forme à section en U et une fonction d'étanchéification, un élément d'accouplement (13) formé d'un seul tenant avec la partie de joint d'étanchéité (11) de manière à être accouplé à une portion de bride d'une automobile, et un matériau d'assemblage (12) disposé par insertion à l'intérieur de l'élément d'accouplement (13), le procédé consistant en :
(a) une étape de fabrication de bourrelet d'étanchéité (S10) dans laquelle le matériau d'assemblage (12) et un élastomère thermoplastique sont extrudés et moulés,
et étant **caractérisé par** :
(b) une étape de pré-traitement (S20) dans laquelle la surface du bourrelet d'étanchéité fabriqué est pré-traitée,
(c) une étape d'application d'un agent glissant (S30) dans laquelle un agent glissant obtenu en mélangeant de la silicone et du polyuréthanne est appliqué sur la surface du bourrelet d'étanchéité pré-traité à l'étape de pré-traitement, et
(d) une étape de durcissement (S40) dans laquelle la couche de revêtement d'agent glissant formée à l'étape d'application de l'agent glissant est durcie,
dans laquelle l'étape de pré-traitement (b) est réalisée par le biais d'une méthode quelconque parmi une méthode d'application d'un apprêt et une méthode de rayonnement plasma électrique, et
dans laquelle l'agent glissant est obtenu en mélangeant 50 à 90 % en poids de la silicone et 10 à 50 % en poids du polyuréthanne.

2. Procédé selon la revendication 1, dans lequel au niveau de l'étape d'application de l'agent glissant (c), l'agent glissant obtenu en mélangeant la silicone et le polyuréthanne est appliqué sur la surface du bourrelet d'étanchéité (10) lorsque la température de surface du bourrelet d'étanchéité (10) est comprise dans une plage de 25 à 150°C.

3. Procédé selon la revendication 1, dans lequel à l'étape de durcissement (d), le bourrelet d'étanchéité (10) est durci par le biais d'une méthode quelconque utilisant la lumière infrarouge (IR), la lumière infrarouge proche (NIR), et la chaleur à une température donnée de 50 à 160°C ou une combinaison de celles-ci pendant une période de temps donnée.

4. Procédé selon la revendication 1, comportant en outre :
(e) une première étape de refroidissement dans laquelle le bourrelet d'étanchéité (10) devient froid après l'étape de fabrication du bourrelet d'étanchéité (a) ou après l'étape de pré-traitement (b), et
(f) une seconde étape de refroidissement dans laquelle le bourrelet d'étanchéité (10) devient froid après l'étape de durcissement (d).

5. Procédé selon la revendication 1, dans lequel le matériau d'assemblage (12) du bourrelet d'étanchéité (10) est composé d'un matériau thermoplastique quelconque tel que le polypropylène ou le polyamide et l'acier, le matériau thermoplastique ayant du talc ou de la fibre de verre ajouté(e) à celui-ci.

6. Procédé selon la revendication 1, dans lequel l'élastomère thermoplastique comprend un quelconque matériau choisi parmi un copolymère bloc styrène thermoplastique SBC, un élastomère thermoplastique oléfinique TPO, un polyuréthanne thermoplastique TPU, un polyamide thermoplastique TPAE, un élastomère thermoplastique polyester TPEE, un chlorure de polyvinyle thermoplastique TPVC, et des produits modifiés de ceux-ci ou une combinaison de deux matériaux ou plus.

7. Bourrelet d'étanchéité automobile (10) comportant : une partie de joint d'étanchéité (11) présentant une forme à section en U et une fonction d'étanchéification, un élément d'accouplement (13) formé d'un seul tenant avec la partie de joint d'étanchéité (11) de manière à être accouplé à une portion de bride d'une automobile, et un matériau d'assemblage (12) disposé par insertion à l'intérieur de l'élément d'accouplement (13), dans lequel le bourrelet d'étanchéité (10) est obtenu en extrudant et moulant le matériau d'assemblage (12) et un élastomère thermoplastique, un apprêt est appliqué sur la surface du bourrelet d'étanchéité (10) extrudé, un agent glissant obtenu en mélangeant de la silicone et du polyuréthanne est appliqué sur la surface de l'apprêt appliqué, et l'apprêt et la couche de revêtement d'agent glissant sont durcis, l'apprêt étant appliqué puis durci en une minute lorsque la température de surface du bourrelet d'étanchéité (10) est comprise dans une plage de 25 à 150°C, l'agent glissant obtenu en mélangeant la silicone et le polyuréthanne étant vaporisé sur la surface du bourrelet d'étanchéité (10) lorsque la température de surface du bourrelet d'étanchéité (10) est comprise dans une plage de 25 à 150°C, et l'agent glissant étant obtenu en mélangeant 50 à 90 % en poids de silicone et 10 à 50 % en poids de polyuréthanne.

8. Bourrelet d'étanchéité automobile (10) selon la revendication 7, dans lequel le bourrelet d'étanchéité (10) présente une résistance à la traction comprise dans une plage de 2,0 à 3,0 Mpa.

9. Bourrelet d'étanchéité automobile (10) selon la revendication 7, dans lequel le bourrelet d'étanchéité (10) sur lequel l'agent glissant est appliqué présente un module de traction de 2 000 à 5 000 Mpa.
